# EUROPEAN PATENT SPECIFICATION

(11) **EP 1 209 551 B1**
(45) Date of publication and mention of the grant of the patent: **13.02.2013**
(21) Application number: 01480085.8
(22) Date of filing: 13.09.2001
(51) Int. Cl.: G06F 21/00

(54) **System and method of preventing unauthorized access to computer resources**
System und Verfahren zum Verhindern von unberechtigtem Zugriff auf Ressourcen eines Rechnersystems
Système et procédé pour empêcher l'accès non authorisé aux ressources d'un système d'ordinateurs

(30) Priority: 28.11.2000 EP 00480107
(43) Date of publication of application: 29.05.2002
(73) Proprietor: International Business Machines Corporation, Armonk, NY 10504 (US)
(72) Inventor: Armingaud, François-Dominique, Gilles, 75012 Paris (FR)
(74) Representative: Gascoyne, Belinda Jane

(56) References cited:
- EP-A- 0 848 315
- US-A- 5 495 235
- US-A- 5 606 315
- US-A- 5 699 514
- US-A- 6 026 491

## Description

### Field of the Invention

The present invention relates to computer security and more particularly to an undetectable system and method forbidding unauthorized access to a computer resource, even when the right password is supplied by chance.

### Background of the Invention

Passwords have been used for more that 40 years to restrict access of certain computer operations to a set of given authorized users. However, with the generalization of the World Wide Web and the Internet connections, it becomes frequent for a home site to be probed by hackers 3 or 4 times a day. A well-known site may be probed more than 1000 times a day. While there are 456,976 possible 6-letters passwords if only alphabetic characters in the same case are used, trying 1000 passwords a day on each of 1000 accounts would give statistically in such a case a reasonable chance to crack one password on one account every day.

In order to prevent a hacker to try all possible passwords at computer speed, two measures are generally used, either separately or in conjunction :
1. locking the user's account when more than N incorrect passwords have been supplied. Only a system administrator will then be able to unlock the account once it is locked;
2. increase delay for a user every time an incorrect password is given for that user. It is worth noting that if the delay is initially set to 1 second and doubled for every invalid attempt, the delay will be of 4,096 seconds - more than one hour - after the 12th invalid password has been supplied, which is an unbearable time for the average hacker.

But both these solutions have drawbacks, because they stay in effect after the attack is over. This allows the hackers a very easy way to induce a denial of service by saturating the system's wrong password tolerance threshold while not saturating the machine. As for example, a disgruntled employee or ex-employee could efficiently and repeatedly paralyze a whole service in a matter of minutes if he knows the list of user ids of his ex-colleagues.

U.S. Pat. N°5,495,235 issued to Durinovic-Johri Sanja et al. on February 27, 1996 discloses a PIN/PUK protection mechanism wherein password guessing attacks are detected only if the last entered password is invalid.

The following patents provide various protection and security methods: U.S. Pat. N°6,026,491 issued to Hiles Paul on February 15, 2000; U.S. Pat. N°5,699,514 issued to Durinovic-Johri Sanja et al. on December 16, 1997; U.S. Pat. N°5,606,315 issued to Gaskins Ronald on February 25, 1997; and EP. N°0,848,315 issued to Compaq Computer Corporation on June 17, 1998.

U.S. Pat. N°5,559,505 issued to McNair E.Bruce on September 24, 1996 and entitled "Security system providing lockout for invalid access attempts" discloses a system for controlling access to a resource to operate such that when an attempt to access a resource using a password fails, the time intervaless can be successful is incremented. And by making the increments increasingly large, repeated access attempts by hackers or unauthorized users is discouraged. This solution offers an enhancement to previous point 2 by also decreasing in relatively small decrements the wait time for each successful password. Such approach aims to be "a better compromise between access control and denial" as mentioned in the description.

However, none of the prior art techniques teach, claim or even suggest a method where no information whatsoever would be provided by the system to the hacker. Such a 'silent' method, in complete opposition with previous approaches, should not provide any information useful for a hacker to detect the right password, even by a careful analysis of response times. Ideally, even a careful analysis by the hacker of unsuccessfully used passwords should be useless; indeed, the method will be almost perfect if the right password has most chances to be crossed out by the hacker as being invalid, and thus not to be tried by him/her anymore.

Accordingly, we claim to provide here a new and utterly different method which eliminates the aforementioned problems and implements a stealth solution.

### Summary of the Invention

The object of the present invention is to provide a method allowing a resource to be practically invulnerable to fast online brute-force attacks. The resource may be any file server, data base, computing resource, web server or any other resource using a password protection scheme, either alone or in conjunction with other protection methods.

Another object of the invention is to deprive an hacker from any information required in order to make an efficient so-called "slow attack". A "slow attack" tries only the maximum number of allowed passwords minus one, but do it every day for every known user id, many weeks in sequence.

Another object of the present invention to offer a stealth protection method which lets any unauthorized user ignoring that the right password has been tried, or even that a protection system - other than the password, of course - is present.

It is yet another object of the invention to provide a method wherein neither the hacker nor the user will be slowed down.

Moreover, security is even based on the fact that the attacker will operate his attempts at the fastest speed he/she can, consistent or not with the idea that the real user is trying to log on - for instance through the use of a program trying different passwords at computer speed. In fact, the fastest his attempts, the better the security, and the greater the probability that he will be denied access even when, by pure chance, he/she is using the right password, and will never know it.

In a preferred embodiment, a method for controlling access to a computer resource consists in performing a user authentication procedure upon receiving a request from a user to access the computer resource. Then, a password verification procedure is executed when said user request is granted. The verification procedure comprises the steps of requesting a password to the user, and comparing the entered password to an expected valid one. The next steps are to check the number of rejected access attempts for that user during a predefined time interval N if the given password matches the expected one and to grant access to the user only if the computed number is lower than a predetermined number K of authorized requests. Otherwise, if either the password does not match the expected one or the number of unsuccessful attempts to log is higher than the predetermined number, the access is denied to the user and a new time stamp of the ungranted access is stored.

The novel features believed to be characteristic of this invention are set forth in the appended claims. The invention itself, however, as well as these and other related objects and advantages thereof, will be best understood by reference to the following detailed description to be read in conjunction with the accompanying drawings.

### Brief Description of the Drawings

- **Figure 1**: is a flow chart of a prior art login sequence.
- **Figure 2**: is a flow chart of the login sequence of the present invention.
- **Figure 3**: shows a preferred implementation of a time stamp memory structure of the present invention.

### Detailed Description of the Preferred Embodiment

The method of the present invention may be summarized as follows : a sliding time window is first chosen having a size N preferably expressed in seconds, and a number K of acceptable logon attempts within this sliding window is determined. In a preferred embodiment N is equal to 3600 seconds and K is equal to 3.

Any attempt to log in more than K times within the sliding window will result for the user (authorized or not) in a received message of the type "INVALID PASSWORD" even if the right password has been supplied. It is the main point of this invention that the hacker gets exactly the same message whether the password is right or wrong. In that way, he/she will normally cross out that password in his list in order to never try it again.

To complete this fundamental idea, one has to make sure that the hacker will never have any opportunity to try all possible passwords. If the typical size of a password is 6 case-sensitive alphanumeric characters, one has to make sure that there will be no way to try all the corresponding passwords ( 62⁶ = about 56 billion) in a typical maximum reasonable password lifetime (say 1 year). Thus, 56 billion divided by 365 days of 24 hours would mean a rate of 1800 passwords per seconds, which is a very unlikely value for a human user. However, such unlikely attempts can be discouraged either :
- by requiring a minimum delay between two attempts, the minimum delay being compatible with human operation (two seconds for example), and rejecting his attempt otherwise. While being quite plausible in any context, this kind of message does not give the hacker any hint about the scheme use by the present invention,
or
- by enforcing a minimum delay (a two-second delay) plus or minus a random time by a programmed delay in the system, which can create the illusion that such a time is a consequence of system load. Here again, no hint is given to the hacker about the proposed scheme.

The minimum delay is an option to secure that the hacker will never have a chance to try all the passwords and thereby guess the method of the invention. However, the primary point is that in the given sliding window condition, even using the valid password results in an "Invalid password" type error message.

While a 2-seconds delay is quite acceptable for manual connections, it may be considered excessive for frequent automated operations when the context does not suggest that any attack is in progress and/or in a context where the sensitivity of data is classified as medium. In such a case, one can consider activating the 2-seconds (or any other value) delay only in an identified attack context. This will be described in detail below.

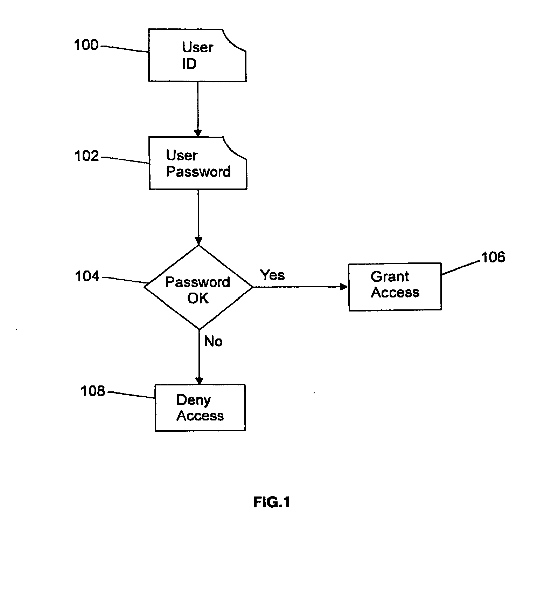

Referring now to figure 1, a basic general process for a user wanting to log a resource is shown.

On a first step 100, the system is asking for the user's name or ID. On some systems, such as the VM/CMS or TSO ones, the existence of this name is checked immediately. On others systems, like the UNIX family, this verification is deferred until the password has been entered. The present method is not linked to any particular condition of this verification.

On step 102, the system is asking for the user's password. Generally this sequence is not echoed, or not echoed as typed, for security reasons.

On next step 104, the system checks that the right password has been typed for that user if this user exists.

If the match is OK (branch YES) access is granted on step 106.

Otherwise, on step 108 the access is denied. Some systems will increase a counter in such a case allow locking the account should too many invalid logons be attempted.

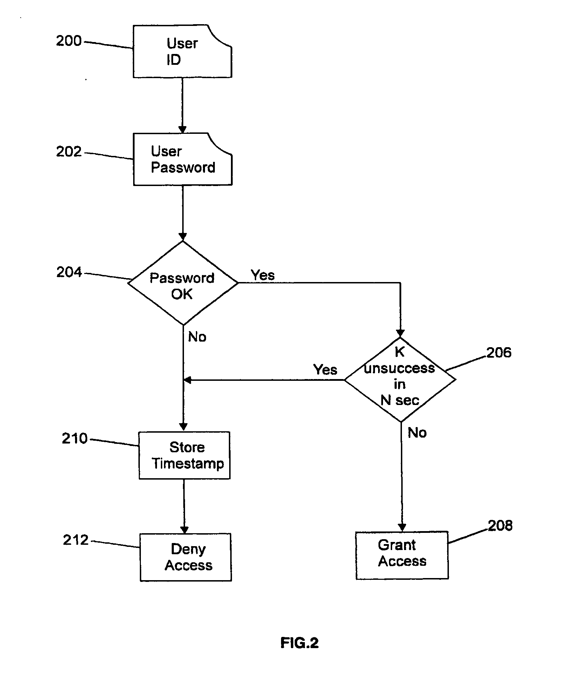

Referring now to figure 2, the process of the present invention is now described.

On first step 200, the system asks a user willing to access a resource to type his user's name or ID. The user here can refer either to a human user or to a client computer (in which case the "user's name" may refer to a class of service rather than to a given computer ID).

On next step 202, the system asks for the user's password. This password may be seen as a given sequence of ASCII characters, printable or not. It will be either stored in a memory part of the solicited resource computer or computed from a random string issued by that computer together with the logon prompt (a "challenge/answer" password).

On next step 204, the system checks if the password matches an expected sequence. This operation is not detailed here as it is not required for the understanding of the present invention, but the skill man could refer to any known method, such as simply comparing the entered password to an existing list of valid passwords.

If the password does not match the expected sequence (branch NO), the process enters step 210 which is detailed herein below.

If the password matches the expected sequence (branch YES), a test is performed on step 206 to determine if more than K unsuccessful logons were attempted during the N last seconds. It is readily obvious that any other kind of time unit can be used, but second is generally the one used.

If no more than K unsuccessful logons were attempted during the N last seconds, access is granted on step 208. Nevertheless ,the user will never be aware of the existence of the test performed on step 206.

If at least K unsuccessful logons were attempted during the last N seconds (branch YES of step 206)), then the system operates exactly the same as if the password did not match (branch NO of step 204) and the process enters step 210. It is important to note that this is the core point of the present invention, and the one which makes this method a really "stealth" one.

On step 210, whether being the result of step 204 (branch NO) or of step 206 (branch YES), a time stamp is memorized in a data structure of the resource computer able to memorized K latest unsuccessful logon attempts. In a preferred implementation, a circular buffer is used as the memory structure, but the skill man may easily devise another type of predefined class depending on which programming language is used.

As already explained, in another embodiment, the method may be enforced by the addition of a security delay. Depending on the relative importance of operation performance vs. the desired "stealthness", the security delay can be applied:
1. both for branch NO of step 204 and branch YES of step 206 which reflect a maximum stealthness with a slightly reduced performance;
2. only for branch YES of step 206 which reflect a maximum performance with a slightly reduced stealthness;
3. at the next logon time by permuting steps 204 and 206 in order to achieve both a maximum stealthness and a maximum performance when no attack is in progress. However, this option is at the expense of some extra programming to implement it in the existing logon procedures.

Finally, on step 212, access is denied with the very same error message than if the match had failed in step 204.

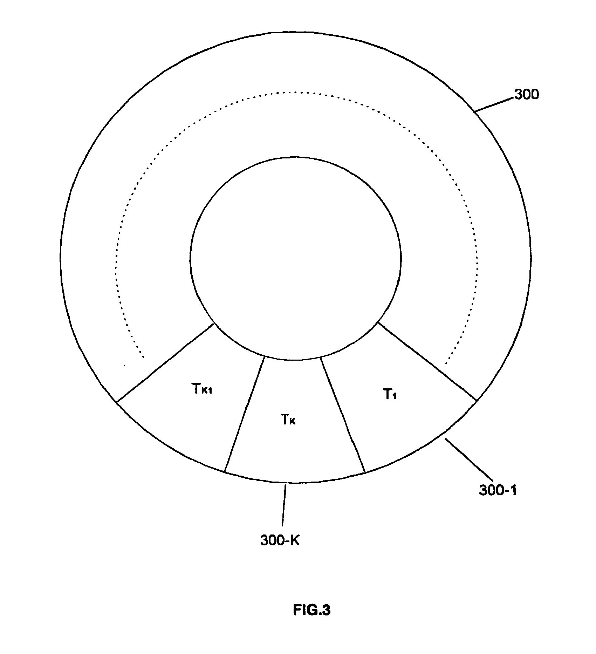

Figure 3 illustrates a preferred implementation of a data structure 300 to store the time stamp list of a given user. The memory 300 is a circular buffer comprising a set of at least K memory cells (300-1 to 300-k), each of which containing a time stamp (T1 to Tk). The process of the invention needs to access efficiently the Kth oldest time stamp 'Tk' at each logon, as well as to insert the current time stamp 'T1' as being the most recent one at each failed logon. The insertion of the present time stamp shifts all the others except the Kth one which is deleted.

In the preferred implementation, 'K' is chosen to be a power of 2 : in that case, a contiguous block of memory is sufficient and the "circular linking" between the memory cells is implemented by incrementing an offset and applying a binary mask to it.

However, if 'K' is not a power of 2, the binary mask can be replaced by an arithmetic modulus (mod K) operation. Alternately, a circular list may also be used.

## Claims

1. A method for controlling access to a computer resource comprising the steps of:
(a) performing a user authentication procedure upon receiving a request from a user to access the computer resource (200); and
(b) performing a password verification procedure when said user request is granted, said verification procedure comprising the steps executed in the following order:
(b1) requesting (202) a password from the user;
(b2) comparing (204) said password to an expected valid password ;
(c1) if said password matches, computing (206) the number of ungranted access for said user during a predefined time interval N, and
(c2) granting access (208) to said user only if said number is lower than a predetermined number K of unauthorized requests; otherwise
(c3) denying access (212) to said user, and storing (210) a time stamp of the ungranted access;
(b3) if said password does not match, denying access (212) to said user, and storing (210) a time stamp of the ungranted access.

2. The method of claim 1 wherein the user request (step c2) is granted after the password request (step b1).

3. The method of claim 1 or 2 wherein the user is a client computer and the computer resource is a server computer.

4. The method of claim 3 wherein the computer resource is a web server.

5. The method of anyone of claims 1 to 4 wherein the step (206) of computing the number of ungranted access is performed before the step (204) of comparing the user password.

6. The method of anyone of claims 1 to 5 wherein the number K of unauthorized requests is a power of 2.

7. The method of anyone of claims 1 to 6 further comprising a step of performing a second password verification procedure after said step 212 of denying access to said user.

8. The method of claim 7 wherein the step of performing the second password verification procedure is executed after a minimum security delay.

9. The method of claim 8 wherein said minimum delay is equal to 2 seconds.

10. A system comprising means adapted for carrying out the method according to anyone of claims 1 to 9.

11. A computer-like readable medium comprising instructions for carrying out the steps of the method of anyone of claims 1 to 9.

## Patentansprüche

1. Verfahren zum Steuern des Zugriffs auf eine Computer-Ressource, aufweisend die Schritte:
(a) Ausführen einer Prozedur zum Überprüfen der Identität eines Benutzers beim Empfang einer Anforderung von einem Benutzer nach Zugriff auf die Computer-Ressource (200); und
(b) Ausführen einer Kennwortüberprüfungsprozedur, wenn die Benutzeranforderung genehmigt wird, wobei die Überprüfungsprozedur die in der folgenden Reihenfolge ausgeführten Schritte aufweist:
(b1) Anfordern (202) eines Kennworts vom Benutzer;
(b2) Vergleichen (204) des Kennworts mit einem
erwarteten gültigen Kennwort;
(c1) wenn das Kennwort übereinstimmt, Berechnen (206)
der Anzahl von nicht gewährten Zugriffen für den Benutzer während einer festgelegten Zeitspanne N, und
(c2) Gewähren des Zugriffs (208) für den Benutzer nur
dann, wenn die Anzahl geringer als eine festgelegte Anzahl K von nicht autorisierten Anforderungen ist; andernfalls (c3) Verweigern des Zugriffs (212) für den Benutzer
und Speichern (210) eines Zeitstempels des nicht gewährten Zugriffs;
(b3) wenn das Kennwort nicht übereinstimmt,
Verweigern des Zugriffs (212) für den Benutzer und Speichern (210) eines Zeitstempels des nicht gewährten Zugriffs.

2. Verfahren nach Anspruch 1, wobei die Benutzeranforderung (Schritt c2) nach der Kennwortanforderung (Schritt b1) genehmigt wird.

3. Verfahren nach Anspruch 1 oder 2, wobei es sich bei dem Benutzer um einen Client-Computer und bei der Computer-Ressource um einen Server-Computer handelt.

4. Verfahren nach Anspruch 3, wobei die Computer-Ressource ein Web-Server ist.

5. Verfahren nach einem der Ansprüche 1 bis 4, wobei der Schritt (206) des Berechnens der Anzahl von nicht gewährten Zugriffen vor dem Schritt (204) des Vergleichens des Benutzerkennworts ausgeführt wird.

6. Verfahren nach einem der Ansprüche 1 bis 5, wobei die Anzahl K von nicht autorisierten Anforderungen eine Zweierpotenz ist.

7. Verfahren nach einem der Ansprüche 1 bis 6, das außerdem einen Schritt des Ausführens einer zweiten Kennwortüberprüfungsprozedur nach dem Schritt 212 des Verweigerns des Zugriffs für den Benutzer aufweist.

8. Verfahren nach Anspruch 7, wobei der Schritt des Ausführens der zweiten Kennwortüberprüfungsprozedur nach einer Mindest-Sicherheitsverzögerung ausgeführt wird.

9. Verfahren nach Anspruch 8, wobei die Mindest-Sicherheitsverzögerung zwei Sekunden lang ist.

10. System, aufweisend ein Mittel, das zum Ausführen des Verfahrens nach einem der Ansprüche 1 bis 9 geeignet ist.

11. Computerähnliches lesbares Medium, das Befehle zum Ausführen der Schritte des Verfahrens nach einem der Ansprüche 1 bis 9 aufweist.

## Revendications

1. Procédé de contrôle d'accès à une ressource informatique, le procédé comprenant les étapes consistant à :
(a) exécuter une procédure d'authentification d'utilisateur à la réception d'une demande provenant d'un utilisateur pour accéder à la ressource informatique (200) ; et
(b) effectuer une procédure de vérification de mot de passe lorsque ladite demande d'utilisateur est agréée, ladite procédure de vérification comprenant les étapes exécutées dans l'ordre suivant :
(b1) demander (202) un mot de passe à l'utilisateur ;
(b2) comparer (204) ledit mot de passe à un mot de passe
valide attendu ;
(c1) si ledit mot de passe correspond, calculer (206) le
nombre d'accès non accordé pour ledit utilisateur pendant un intervalle de temps prédéfini N, et
(c2) accorder l'accès (208) audit utilisateur uniquement
si ledit nombre est inférieur à un nombre prédéterminé K de demandes non autorisées ; sinon
(c3) refuser l'accès (212) audit utilisateur, et mémoriser (210) une estampille temporelle de l'accès non accordé ;
(b3) si ledit mot de passe ne correspond pas, refuser
l'accès (212) audit utilisateur, et mémoriser (210) une estampille temporelle de l'accès non accordé.

2. Procédé selon la revendication 1, dans lequel la demande d'utilisateur (étape c2) est agréée après la demande de mot de passe (étape b1).

3. Procédé selon la revendication 1 ou 2, dans lequel l'utilisateur est un ordinateur client et la ressource informatique est un ordinateur serveur.

4. Procédé selon la revendication 3, dans lequel la ressource informatique est un serveur Web.

5. Procédé selon l'une quelconque des revendications 1 à 4, dans lequel l'étape (206) consistant à calculer le nombre d'accès non accordé est effectuée avant l'étape (204) consistant à comparer le mot de passe d'utilisateur.

6. Procédé selon l'une quelconque des revendications 1 à 5, dans lequel le nombre K de demandes non autorisées est une puissance de 2.

7. Procédé selon l'une quelconque des revendications 1 à 6, comprenant en outre une étape consistant à effectuer une seconde procédure de vérification de mot de passe après ladite étape 212 consistant à refuser l'accès audit utilisateur.

8. Procédé selon la revendication 7, dans lequel l'étape consistant à effectuer la seconde procédure de vérification de mot de passe est exécutée après un délai minimum de sécurité.

9. Procédé selon la revendication 8, dans lequel ledit délai minimum est égal à 2 secondes.

10. Système comprenant des moyens adaptés pour mettre en oeuvre le procédé selon l'une quelconque des revendications 1 à 9.

11. Support lisible de type informatique comprenant des instructions pour exécuter les étapes du procédé selon l'une quelconque des revendications 1 à 9.
